# EUROPÄISCHE PATENTSCHRIFT

(11) **EP 4 281 297 B1**
(45) Veröffentlichungstag und Bekanntmachung des Hinweises auf die Patenterteilung: **05.03.2025**
(21) Anmeldenummer: 21823755.0
(22) Anmeldetag: 29.11.2021
(51) Int. Cl.: B60C 11/03, B60C 11/12

(54) **FAHRZEUGLUFTREIFEN**
PNEUMATIC VEHICLE TYRE
PNEUMATIQUE DE VÉHICULE

(30) Priorität: 25.01.2021 DE 102021200630
(43) Veröffentlichungstag der Anmeldung: 29.11.2023
(73) Patentinhaber: Continental Reifen Deutschland GmbH, 30175 Hannover (DE)
(72) Erfinder: ECKE, Stefan, 30165 Hannover (DE); PAGAC, Lubomir, 30165 Hannover (DE); SOYYUECE, Atakan, 30165 Hannover (DE); ÖZÜDURU, Ahmet, 30165 Hannover (DE)
(74) Vertreter: Continental Corporation
(86) Internationale Anmeldenummer: PCT/DE2021/200210
(87) Internationale Veröffentlichungsnummer: WO 2022/156847

(56) Entgegenhaltungen:
- EP-A2- 2 108 531
- US-A1- 2018 194 171
- US-A1- 2018 290 498

## Beschreibung

Die Erfindung betrifft einen Fahrzeugluftreifen mit einem Laufstreifen mit zumindest einer von einer auf Profiltiefe ausgeführten Umfangsrille begrenzten schulterseitigen Profilrippe, welche mit einer Vielzahl von in Draufsicht parallel zueinander verlaufenden, vor der Umfangsrille endenden Querrillen mit jeweils einem Rillengrund und einer in Fortsetzung zu diesem zur Laufstreifenperipherie verlaufenden Endflanke versehen ist und welche ferner mit von der Umfangsrille ausgehenden, zur Laufstreifenperipherie offenen Vertiefungen mit einer im Inneren der schulterseitigen Profilrippe liegenden, zur Laufstreifenperipherie verlaufenden Endflanke versehen ist, wobei die Vertiefungen jeweils einer Querrille zugeordnet sind, sodass deren Endflanken einander gegenüberliegen, wobei zwischen jeder Vertiefung und der ihr zugeordneten Querrille jeweils ein gegenüber der Querrille und der Vertiefung schmäler und seichter ausgeführter Kurzeinschnitt mit einer Tiefe von mindestens 30% der Profiltiefe verläuft.

Ein derartiger Fahrzeugluftreifen ist beispielsweise aus der US 2018/0290498 A1 bekannt. Dieser Fahrzeugluftreifen weist einen Laufstreifen mit von Umfangsrillen begrenzten schulterseitigen Profilrippen auf, welche mit vor den Umfangsrillen endenden, je eine Knickstelle aufweisenden Querrillen und mit diesen zugeordneten von den Umfangsrillen ausgehenden Vertiefungen versehen sind. Zwischen der Endflanke jeder Querrille und der Endflanke der zugeordneten Vertiefung ist jeweils ein in Draufsicht beispielsweise gerade sowie in Fortsetzung der Mittelebene der Vertiefung verlaufender Einschnitt mit einer Tiefe von vorzugsweise mindestens 50% der Profiltiefe ausgebildet. Unter Belastung stützen sich die Profilblöcke der Profilrippen gegenseitig aneinander ab, wodurch die schulterseitigen Profilrippen gleichmäßig abreiben und das Traktionsverhalten auf Schnee verbessert sein soll.

Aus der EP 3 628 511 A1 ist ein Fahrzeugluftreifen mit einem Laufstreifen mit einer schulterseitigen Profilrippe bekannt, in welcher in Abständen von 3,0 mm bis 10,0 mm vor der Umfangsrille endende Querrillen verlaufen. Zu den Querrillen gehören dabei erste und zweite Querrillen, wobei der Abstand der ersten Querrillen zur Umfangsrille kleiner ist als der Abstand der zweiten Querrillen zur Umfangsrille. Bei jeder zweiten Querrille ist in der schulterseitigen Profilrippe eine von der Umfangsrille ausgehende, in die Profilrippe hineinragende, zur Laufstreifenperipherie offene Vertiefung ausgebildet. Eine derart mit Querrillen strukturierte schulterseitige Profilrippe wird beim Fahren auf nasser Fahrbahn wirkungsvoll entwässert und weist eine vorteilhaft hohe Steifigkeit auf.

Schulterseitige Profilrippen mit vor der schulterseitigen Umfangsrille endenden Querrillen weisen an der schulterseitigen Umfangsrille einen gegenüber der sonstigen Profilrippe steifer ausgeführten Umfangsabschnitt auf, welcher auch als "Handlingrippe" bezeichnet wird. Bedingt durch ihre höhere Steifigkeit verstärkt die Handlingrippe bei Kurvenfahrt die Übertragung von Seitenführungskräften auf den Untergrund. Zur Verbesserung der Performance auf Schnee ist es üblich, in der Handlingrippe Einschnitte auszubilden, welche jedoch die Steifigkeit der Handlingrippe wieder etwas reduzieren und das Reifen-Fahrbahn-Geräusch (Abrollgeräusch) verstärken.

Der Erfindung liegt daher die Aufgabe zugrunde, bei einem Fahrzeugluftreifen der eingangs genannten Art die Performance auf Schnee, unter Aufrechterhaltung einer möglichst hohen Profilsteifigkeit und eines geringen Abrollgeräusches, weiter zu verbessern.

Gelöst wird die gestellte Aufgabe erfindungsgemäß dadurch, dass sich der Kurzeinschnitt in Draufsicht aus zwei, einen Winkel von 130° bis 170° einschließenden Einschnittabschnitten zusammensetzt, von welchen der eine bis zur Endflanke der Vertiefung und der andere bis zur Endflanke der Querrille reicht.

Da die Kurzeinschnitte jeweils zwischen einer Querrille und einer Vertiefung verlaufen, weisen diese eine ausgeprägte Öffnungsfähigkeit beim Abrollen des Reifens am Untergrund auf, wodurch die Einschnittkanten besonders effektiv als zusätzliche Griffkanten wirken, welche die Schneeperformance verbessern. Die Einschnittabschnitte verleihen den Kurzeinschnitten einen in Draufsicht V-förmigen Verlauf, wodurch sich die Einschnittwände und damit die entsprechenden Segmente der Profilrippe unter axialer Belastung aneinander abstützen, sodass eine vorteilhaft hohe Steifigkeit der Profilrippe unter Axialbelastung erhalten bleibt. Zusätzlich wird durch den V-förmigen Verlauf die Ausbreitung von Schallwellen im Einschnittinneren unterdrückt, sodass der Beitrag der Kurzeinschnitte zum Abrollgeräusch, insbesondere im kritischen Frequenzbereich von rund 1000 Hz, äußerst gering und somit vernachlässigbar ist.

Gemäß einer bevorzugten Ausführung weist der Kurzeinschnitt eine Breite von 0,4 mm bis 1,0 mm auf, was insbesondere für die Profilsteifigkeit günstig ist.

Gemäß einer weiteren bevorzugten Ausführung beträgt die Tiefe des Kurzeinschnittes maximal der um 1,5 mm verringerten Profiltiefe, was ebenfalls für die Profilsteifigkeit von Vorteil ist.

Eine weitere bevorzugte Ausführung ist dadurch gekennzeichnet, dass der Winkel, welchen die Einschnittabschnitte miteinander einschließen, 150° bis 165°, insbesondere bis zu 155°, beträgt. Ein derartiger Winkel ist für die Griffwirkung der Einschnittkanten und die Unterdrückung der Ausbreitung von Schallwellen im Einschnittinneren vorteilhaft.

Gemäß einer weiteren bevorzugten Ausführung verlaufen die Einschnittabschnitte, in Draufsicht betrachtet, zur axialen Richtung jeweils unter einem Winkel von 2° bis 18°, insbesondere von 3° bis 15°, bevorzugt von 5° bis 10°. Diese Maßnahme sorgt vor allem für eine gute Performance auf Schnee.

Eine ebenfalls für eine gute Schneeperformance vorteilhafte Variante der zuvor genannten Ausführung besteht darin, dass der Winkel, unter welchem der Einschnittabschnitt, welcher bis zur Endflanke der Vertiefung verläuft, vom Winkel, unter welchem der Einschnittabschnitt, welcher bis zur Endflanke der Querrille verläuft, um höchstens 10°, bevorzugt um höchstens 5°, abweicht.

Eine weitere bevorzugten Ausführung ist dadurch gekennzeichnet, dass die Vertiefung bezüglich einer in radialer Richtung verlaufenden Mittelebene symmetrisch ausgeführt ist, wobei die Querrille eine Rillenmittellinie aufweist, wobei - jeweils in Draufsicht betrachtet - die Mittelebene der Vertiefung zur Rillenmittellinie der Querrille bezüglich der axialen Richtung gegensinnig geneigt ist und wobei - jeweils bezüglich der axialen Richtung - der Einschnittabschnitt, welcher bis zur Endflanke der Vertiefung verläuft, gleichsinnig zur Mittelebene der Vertiefung und der Einschnittabschnitt, welcher bis zur Endflanke der Querrille verläuft, gleichsinnig zur Rillenmittellinie geneigt ist. Durch die gleichsinnige Neigung ist die Öffnungsfähigkeit des Kurzeinschnittes besonders ausgeprägt, wodurch die Wirkung der Einschnittkanten als Griffkanten und die Fähigkeit des Einschnittes Schnee aufzunehmen, verbessert sind.

Dieser Effekt wird weiter verstärkt, wenn bei der zuvor genannten bevorzugten Ausführung - jeweils in Draufsicht betrachtet - der Einschnittabschnitt, welcher bis zur Endflanke der Vertiefung verläuft, bezogen auf die Einschnittmittellinie, in geradliniger Verlängerung der Mittelebene der Vertiefung und der Einschnittabschnitt, welcher bis zur Endflanke der Querrille verläuft, bezogen auf die Einschnittmittellinie, in geradliniger Verlängerung der Rillenmittellinie verläuft.

Eine besonders vorteilhafte Variante der zuvor genannten bevorzugten Ausführung ist dadurch gekennzeichnet, dass die Vertiefung an der Laufstreifenperipherie eine senkrecht zu ihrer Mittelebene ermittelte Breite von 75% bis 125%, insbesondere von 90% bis 110%, besonders bevorzugt von 95% bis 105%, der Breite der Querrille innerhalb der Bodenaufstandsfläche des Laufstreifens aufweist. Beim Fahren auf Schnee sammelt sich in der Vertiefung Schnee an, sodass über den Effekt der Schnee-Schnee-Reifung die Schneeperformance weiter verbessert ist. Gleichzeitig hat die Vertiefung vorteilhafterweise kaum Auswirkungen auf die Steifigkeit der schulterseitigen Profilrippe.

Eine weitere besonders vorteilhafte Variante der zuvor genannten bevorzugten Ausführung ist dadurch gekennzeichnet, dass die Vertiefung eine in die axiale Richtung projizierte, auf ihre Mittelebene bezogene Länge von 15% bis 25% der innerhalb der Bodenaufstandsfläche an der Laufstreifenperipherie in axialer Richtung ermittelten Breite der schulterseitigen Profilrippe aufweist.

Gemäß einer weiteren bevorzugten Ausführung weist die Vertiefung an ihrer tiefsten Stelle in radialer Richtung eine Tiefe auf, welche 50% bis 100% der Profiltiefe, vorzugsweise mindestens 60% der Profiltiefe und maximal der um 1,0 mm verringerten Profiltiefe, beträgt. Die erläuterte Wirkung der Vertiefung bleibt durch diese Maßnahme auch bei fortschreitendem Laufstreifenabrieb erhalten.

Eine weitere bevorzugten Ausführung ist dadurch gekennzeichnet, dass die Vertiefung an ihrer tiefsten Stelle in radialer Richtung eine Tiefe und die Querrille an ihrer tiefsten Stelle in radialer Richtung eine Tiefe aufweist, wobei die Tiefe der Vertiefung von der Tiefe der Querrille um höchstens 1,0 mm abweicht.

Gemäß einer weiteren bevorzugten Ausführung weist die schulterseitige Querrille innerhalb der Bodenaufstandsfläche eine an der Laufstreifenperipherie ermittelte, in die axiale Richtung projizierte, auf die Rillenmittellinie bezogene Länge von 40% bis 60%, insbesondere von 45% bis 55%, der auf analoge Weise ermittelten Breite der schulterseitigen Profilrippe auf. Diese Maßnahme ist insbesondere für die Steifigkeit der Profilrippe von Vorteil.

Gemäß einer weiteren bevorzugten Ausführung ist Vertiefung, in Draufsicht betrachtet, U-förmig aufgeführt, wobei die freien Enden der U-Schenkel an der Umfangsrille liegen.

Gemäß einer weiteren bevorzugten Ausführung ist bei der Vertiefung an einem der an der Umfangsrille liegenden Eckbereich der schulterseitigen Profilrippe eine dreieckige Eckfase ausgebildet, wodurch ein Abblättern von Gummimaterial in diesem Bereich vermieden wird.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine vereinfachte Draufsicht auf einen in die Ebene abgewickelten Umfangsabschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2,
Fig. 6 einen Schnitt entlang der Linie VI-VI der Fig. 2 und
Fig. 7 einen Schnitt entlang der Linie VII-VII der Fig. 2.

Gemäß der Erfindung ausgeführte Fahrzeugluftreifen sind Reifen für mehrspurige Kraftfahrzeuge, sowie vorzugsweise Reifen in Radialbauart für Personenkraftwagen, Vans oder Light-Trucks (=Leichte LKWs mit zGM ≤ 7,5 t).

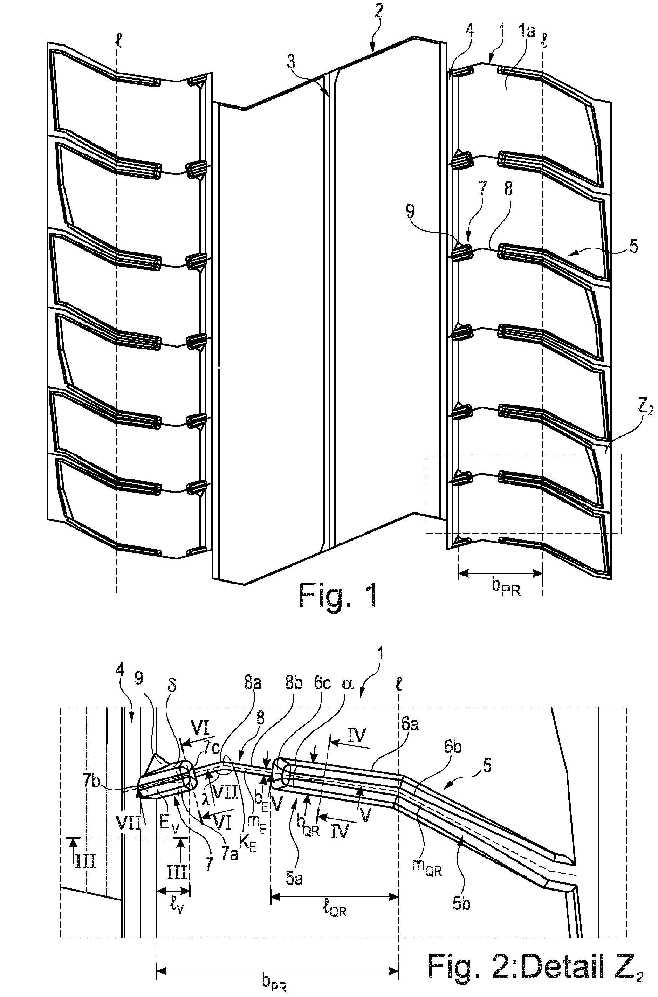

Fig. 1 zeigt eine Draufsicht auf einen Umfangsabschnitt eines Laufstreifens eines Fahrzeugluftreifens. Die seitlichen Ränder der Bodenaufstandsfläche des Laufstreifens sind durch gestrichelte Linien I angedeutet. Die Bodenaufstandsfläche entspricht dem statisch ermittelten Footprint gemäß E.T.R.T.O.-Standards (Last bei 70% der maximalen Tragfähigkeit bei einem Innendruck von 85% nach E.T.R.T.O.-Norm).

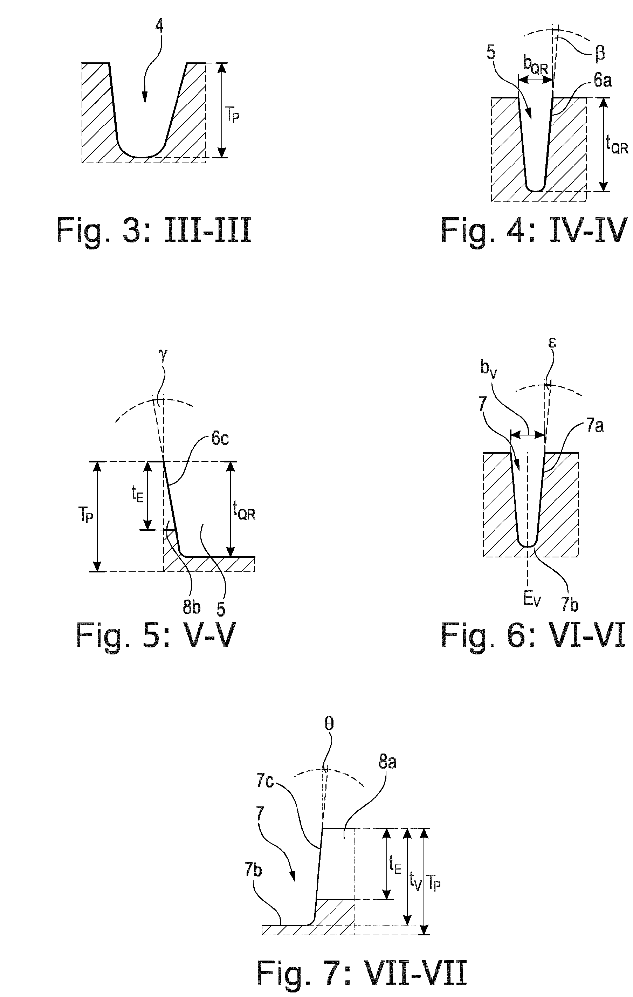

Der Laufstreifen weist zwei schulterseitige Profilrippen 1 und zwei mittlere Profilrippen 2 auf, wobei die mittleren Profilrippen 2 durch eine zentrale Umfangsrille 3 und die schulterseitigen Profilrippen 1 zur jeweils benachbarten mittleren Profilrippe 2 durch je eine schulterseitige Umfangsrille 4 getrennt sind. Die Umfangsrillen 3, 4 verlaufen beim gezeigten Ausführungsbeispiel in Draufsicht gerade und sind in radialer Richtung auf die jeweils vorgesehene Profiltiefe T_{P} (Fig. 3, gezeigt für eine schulterseitige Umfangsrille 4) ausgeführt, welche für den bevorzugten Reifentyp üblicherweise 6,5 mm bis 10,0 mm beträgt. Die mittleren Profilrippen 2 sind lediglich schematisch dargestellt und können in an sich bekannter Weise mit Rillen, Einschnitten und dergleichen strukturiert sein.

Jede schulterseitige Profilrippe 1 weist eine innerhalb der Bodenaufstandsfläche, an der Laufstreifenperipherie in axialer Richtung ermittelte Breite b_{PR} auf und ist mit in Draufsicht parallel zueinander verlaufenden schulterseitigen Querrillen 5 versehen, welche über den jeweiligen seitlichen Rand (Linie I) der Bodenaufstandsfläche hinausverlaufen, laufstreifeninnenseitig innerhalb der schulterseitigen Profilrippe 1 in einem Abstand vor der entsprechenden schulterseitigen Umfangsrille 4 enden und der Profilrippe 1 Profilblöcke 1a verleihen.

Gemäß Fig. 2 weist jede schulterseitige Querrille 5 eine in Draufsicht dem Rillenverlauf folgende Rillenmittellinie m_{QR} auf und setzt sich beim gezeigten Ausführungsbeispiel aus einem laufstreifeninnenseitigen Rillenabschnitt 5a und einem laufstreifenaußenseitigen Rillenabschnitt 5b zusammen, wobei die Rillenabschnitte 5a, 5b - bezogen auf die Rillenmittellinie m_{QR} - beim gezeigten Ausführungsbeispiel am jeweiligen seitlichen Rand der Bodenaufstandsfläche (Linie I) aneinander anschließen. Die Rillenabschnitte 5a, 5b verlaufen, in Draufsicht betrachtet, jeweils gerade, wobei der laufstreifeninnenseitige Rillenabschnitt 5a - bezogen auf die Rillenmittellinie m_{QR} - zur axialen Richtung unter einem Winkel α von 2° bis 18°, insbesondere von 3° bis 15°, bevorzugt von 5° bis 10°, verläuft und der laufstreifenaußenseitige Rillenabschnitt 5b zur axialen Richtung stärker geneigt ist als der laufstreifeninnenseitige Rillenabschnitt 5a. Die schulterseitige Querrille 5 weist - jeweils ermittelt innerhalb der Bodenaufstandsfläche - eine an der Laufstreifenperipherie in Draufsicht senkrecht zur Rillenmittellinie m_{QR} gemessene Breite b_{QR} (siehe auch Fig. 4) von 3,0 mm bis 7,0 mm, eine in die axiale Richtung projizierte, auf die Rillenmittellinie m_{QR} bezogene Länge l_{QR} von 40% bis 60%, insbesondere von 45% bis 55%, der Breite b_{PR} der schulterseitigen Profilrippen 1 und in radialer Richtung an ihrer tiefsten Stelle eine Tiefe t_{QR} (Fig. 4) auf. Die Tiefe t_{QR} (Fig. 4) beträgt 70% bis 100% der Profiltiefe T_{P} (Fig. 3), bevorzugt mindestens 80% Profiltiefe T_{P} und maximal der um 1,0 mm verringerten Profiltiefe T_{P}. Die schulterseitige Querrille 5 ist durch zwei Rillenflanken 6a, einen Rillengrund 6b und an ihrem laufstreifeninnenseitigen Ende durch eine in Fortsetzung des Rillengrundes 6b sowie zur Laufstreifenperipherie verlaufende Endflanke 6c (vergl. Fig. 5) begrenzt. Die Rillenflanken 6a verlaufen, im Querschnitt der Querrille 5 betrachtet, zur radialen Richtung unter einem Winkel β (Fig. 4) von 0° bis 7°. Die Endflanke 6c verläuft, im entlang der Rillenmittellinie m_{QR} ausgerichteten Querschnitt betrachtet, zur radialen Richtung unter einem Winkel γ (Fig. 5) von 5° bis 15°, insbesondere von 8° bis 12°.

Wie Fig. 1 zeigt, ist axial seitlich jeder schulterseitigen Querrille 5 eine von der jeweiligen schulterseitigen Umfangsrille 4 ausgehende, in die schulterseitige Profilrippe 1 hineinragende, zur Laufstreifenperipherie offene, sacknutartige Vertiefung 7 vorgesehen (siehe auch Fig. 2). Zwischen jeder schulterseitigen Querrille 5 und der ihr zugeordneten sacknutartigen Vertiefung 7 verläuft ein in Draufsicht flach V-förmiger Kurzeinschnitt 8.

Gemäß Fig. 2 ist die sacknutartige Vertiefung 7 in Draufsicht U-förmig ausgeführt, wobei die freien Enden der U-Schenkel an der schulterseitigen Umfangsrille 4 liegen. Die Vertiefung 7 ist bezüglich einer Mittelebene Ev, welche in radialer Richtung (Fig. 6) sowie, in Draufsicht auf den Laufstreifen betrachtet, zur axialen Richtung unter einem Winkel δ von 2° bis 18°, insbesondere von 3° bis 15°, bevorzugt von 5° bis 10°, verläuft, symmetrisch ausgeführt. Die Mittelebene Ev ist dabei in Draufsicht bezüglich der axialen Richtung gegensinnig zum laufstreifeninnenseitigen Rillenabschnitt 5a geneigt. Im Hinblick auf die Symmetrie der Vertiefung 7 bleibt eine durch den Winkel δ bedingte Asymmetrie, welche am Einmündungsbereich der Vertiefung 7 zur schulterseitigen Umfangsrille 4 vorliegt, unberücksichtigt.

Wie Fig. 2 ferner zeigt, ist die Vertiefung 7 durch zwei von der schulterseitigen Umfangsrille 4 ausgehende, an unterschiedlichen Seiten der Mittelebene Ev verlaufende, daher einander gegenüberliegende Seitenflächen 7a (vergl. Fig. 6), einen von der schulterseitigen Umfangsrille 4 ausgehenden Boden 7b (vergl. Fig. 6 und Fig. 7) und eine im Inneren der Profilrippe 2 liegende, zur Laufstreifenperipherie sowie in Draufsicht senkrecht zur Mittelebene Ev verlaufende und von dieser halbierte Endflanke 7c (vergl. Fig. 7) begrenzt. Wie Fig. 6 zeigt, verlaufen die Seitenflächen 7a, im senkrecht zur Mittelebene Ev und in radialer Richtung ausgerichteten Querschnitt betrachtet, zur radialen Richtung unter einem Winkel ε von 0° bis 7°, insbesondere von 4° bis 6°. Der Boden 7b ist, im senkrecht zur Mittelebene Ev und in radialer Richtung ausgerichteten Querschnitt betrachtet, U-förmig gerundet ausgeführt (Fig. 6) und verläuft, betrachtet in der Mittelebene Ev, parallel zur Laufstreifenperipherie (Fig. 7). Wie Fig. 7 zeigt, verläuft die Endflanke 7c, im in der Mittelebene Ev liegenden Querschnitt sowie in parallel zur Mittelebene Ev ausgerichteten Querschnittebenen, betrachtet, zur radialen Richtung unter einem Winkel θ von 0° bis 10°, insbesondere von 3° bis 7°. Die Übergänge zwischen der Endflanke 7c, dem Boden 7b und den Seitenflächen 7a sind derart gerundet ausgeführt, dass diese, im jeweiligen Querschnitt betrachtet, knickfrei ineinander übergehen (Fig. 2, Fig. 6, Fig. 7). Die Vertiefung 7 weist - jeweils ermittelt an der Laufstreifenperipherie - eine senkrecht zur Mittelebene Ev zwischen den Seitenflächen 7a ermittelte Breite bv (Fig. 6) von 75% bis 125%, insbesondere von 90% bis 110%, besonders bevorzugt von 95% bis 105%, der Breite b_{QR} (Fig. 4) der jeweils benachbarten schulterseitigen Querrille 5, eine in die axiale Richtung projizierte, auf die Mittelebene Ev bezogene Länge Iv (Fig. 2) von 15% bis 25% der Breite b_{PR} der schulterseitigen Profilrippe 1 und in radialer Richtung an ihrer tiefsten Stelle eine Tiefe tv (Fig. 7) auf. Die Tiefe tv beträgt 50% bis 100% der Profiltiefe T_{P}, bevorzugt mindestens 60% der Profiltiefe T_{P} und maximal der um 1,0 mm verringerten Profiltiefe T_{P}. Besonders bevorzugter Weise stimmt die Tiefe tv der Vertiefung 7 (Fig. 7) mit der bereits erwähnten Tiefe t_{QR} der Querrille 5 (Fig. 4, Fig. 5) überein oder weicht von dieser um höchstens 1,0 mm ab.

Wie Fig. 2 ferner zeigt, setzt sich der bereits erwähnte, in Draufsicht flach V-förmig verlaufende Kurzeinschnitt 8 aus zwei in Draufsicht gerade verlaufenden Einschnittabschnitten 8a, 8b zusammen, welche einen Winkel λ von 130° bis 170°, insbesondere von 150° bis 165°, bevorzugt von bis zu 155°, einschließen. Ferner weist der Kurzeinschnitt 8 eine in Draufsicht seinem Verlauf folgende Einschnittmittellinie m_{E} auf, welche - entsprechend des flach V-förmigen Verlaufes - einen Knickpunkt K_{E} aufweist. Der Einschnittabschnitt 8a verläuft, in Draufsicht betrachtet, ausgehend vom Knickpunkt K_{E} zur Vertiefung 7 und mündet in diese über die Endflanke 7c ein (vergl. Fig. 7). Der Einschnittabschnitt 8b verläuft, in Draufsicht betrachtet, ausgehend vom Knickpunkt K_{E} zur Querrille 5 und mündet in diese über die Endflanke 6c ein.

Beim gezeigten Ausführungsbeispiel verläuft der in die Vertiefung 7 einmündende Einschnittabschnitt 8a, in Draufsicht betrachtet und bezogen auf die Einschnittmittellinie m_{E}, in geradliniger Verlängerung der Mittelebene Ev der Vertiefung 7 und daher zur axialen Richtung unter dem bereits erwähnten Winkel δ der Mittelebene Ev. Der in die Querrille 5 einmündende Einschnittabschnitt 8b verläuft beim gezeigten Ausführungsbeispiel, in Draufsicht betrachtet und bezogen auf die Einschnittmittellinie m_{E}, in geradliniger Verlängerung der Rillenmittellinie m_{QR} der Querrille 5 und daher zur axialen Richtung unter dem bereits erwähnten Winkel α des laufstreifeninnenseitigen Rillenabschnittes 5a. Der Winkel δ der Mittelebene Ev und der Winkel α des Rillenabschnittes 5a sind beim Ausführungsbeispiel daher auf den erwähnten Winkel λ, welchen die Einschnittabschnitte 8a, 8b einschließen, entsprechend abgestimmt.

Der Kurzeinschnitt 8 weist eine konstante Breite b_{E} von 0,4 mm bis 1,0 mm, insbesondere von bis zu 0,8 mm, und in radialer Richtung eine konstante Tiefe t_{E} (Fig. 5, Fig. 7) von mindestens 30% der Profiltiefe T_{P} und maximal der kleineren der beiden Tiefen tv (Vertiefung 7, Fig. 7) und t_{QR} (Querrille 5, Fig. 5) auf. Bevorzugter Weise sind die Tiefen t_{E}, tv, t_{QR} derart aufeinander abgestimmt, dass die Tiefe t_{E} des Kurzeinschnittes 8 maximal der um 1,5 mm verringerten Profiltiefe T_{P} beträgt. Der Kurzeinschnitt 8 ist daher sowohl schmäler und seichter als die Querrille 5, als auch schmäler und seichter als die Vertiefung 7 ausgeführt.

Wie Fig. 1 zeigt, ist beim gezeigten Ausführungsbeispiel bei jeder Vertiefung 7 an einem der an der schulterseitigen Umfangsrille 4 liegenden Eckbereiche des jeweiligen Profilblockes 1a eine dreieckige Eckfase 9 (vergl. Fig. 2) ausgebildet.

Die Erfindung ist auf das beschriebene Ausführungsbeispiel nicht beschränkt.

Insbesondere weist der Laufstreifen in zumindest einer Schulter eine gemäß der Erfindung ausgeführte schulterseitige Profilrippe auf. Die dreieckigen Eckfasen sind optional. Die schulterseitigen Querrillen können in Draufsicht auch insgesamt gerade oder bogenförmig verlaufen. Die Einschnittabschnitte des Kurzeinschnittes müssen nicht in geradliniger Fortführung der Mittellinie m_{QR} der Querrille 5 bzw. der Mittelebene Ev der Vertiefung 7 verlaufen. Insbesondere können die Einschnittabschnitte des Kurzeinschnittes unabhängig von der Erstreckungsrichtung der Querrille 5 und der Erstreckungsrichtung der Vertiefung 7 unter den erwähnten Winkeln α bzw. δ verlaufen. Die schulterseitigen Profilrippen sind vorzugsweise mit in an sich bekannter Weise ausgeführten, weiteren Einschnitten versehen.

### Bezugszeichenliste

- 1: schulterseitige Profilrippe
- 1a: Profilblock
- 2: mittlere Profilrippe
- 3: zentrale Umfangsrille
- 4: schulterseitige Umfangsrille
- 5: schulterseitige Querrille
- 5a: laufstreifeninnenseitiger Rillenabschnitt
- 5b: laufstreifenaußenseitiger Rillenabschnitt
- 6a: Rillenflanke
- 6b: Rillengrund
- 6c: Endflanke
- 7: Vertiefung
- 7a: Seitenfläche
- 7b: Boden
- 7c: Endflanke
- 8: Kurzeinschnitt
- 8a, 8b: Einschnittabschnitt
- 9: Eckfase
- b_{E}, b_{PR}, b_{QR}, b_{V}: Breite
- E_{V}: Mittelebene
- I: Linie
- l_{QR}, l_{V}: Länge
- m_{QR}: Rillenmittellinie
- m_{E}: Einschnittmittellinie
- K_{E}: Knickpunkt
- t_{E}, t_{QR}, t_{V}: Tiefe
- T_{P}: Profiltiefe
- Z₂: Detail
- α, β, γ, δ, ε, θ, λ: Winkel

## Patentansprüche

1. Fahrzeugluftreifen mit einem Laufstreifen mit zumindest einer von einer auf Profiltiefe (T_{P}) ausgeführten Umfangsrille (4) begrenzten schulterseitigen Profilrippe (1),
welche mit einer Vielzahl von in Draufsicht parallel zueinander verlaufenden, vor der Umfangsrille (4) endenden Querrillen (5) mit jeweils einem Rillengrund (6b) und einer in Fortsetzung zu diesem zur Laufstreifenperipherie verlaufenden Endflanke (6c) versehen ist und
welche ferner mit von der Umfangsrille (4) ausgehenden, zur Laufstreifenperipherie offenen Vertiefungen (7) mit einer im Inneren der schulterseitigen Profilrippe (1) liegenden, zur Laufstreifenperipherie verlaufenden Endflanke (7c) versehen ist, wobei die Vertiefungen (7) jeweils einer Querrille (5) zugeordnet sind, sodass deren Endflanken (6c, 7c) einander gegenüberliegen,
wobei zwischen jeder Vertiefung (7) und der ihr zugeordneten Querrille (5) jeweils ein gegenüber der Querrille (5) und der Vertiefung (7) schmäler und seichter ausgeführter Kurzeinschnitt (8) mit einer Tiefe (t_{E}) von mindestens 30% der Profiltiefe (T_{P}) verläuft,
**dadurch gekennzeichnet,**
**dass** sich der Kurzeinschnitt (8) in Draufsicht aus zwei, einen Winkel (λ) von 130° bis 170° einschließenden Einschnittabschnitten (8a, 8b) zusammensetzt, von welchen der eine bis zur Endflanke (7c) der Vertiefung (7) und der andere bis zur Endflanke (6c) der Querrille (5) reicht.

2. Fahrzeugluftreifen nach Anspruch 1, **dadurch gekennzeichnet, dass** der Kurzeinschnitt (8) eine Breite (b_{E}) von 0,4 mm bis 1,0 mm aufweist.

3. Fahrzeugluftreifen nach Anspruch 1 oder 2, **dadurch gekennzeichnet, dass** die Tiefe (t_{E}) des Kurzeinschnittes (8) maximal der um 1,5 mm verringerten Profiltiefe (T_{P}) beträgt.

4. Fahrzeugluftreifen nach einem der Ansprüche 1 bis 3, **dadurch gekennzeichnet, dass** der Winkel (λ), welchen die Einschnittabschnitte (8a, 8b) miteinander einschließen, 150° bis 165°, insbesondere bis zu 155°, beträgt.

5. Fahrzeugluftreifen nach einem der Ansprüche 1 bis 4, **dadurch gekennzeichnet, dass** die Einschnittabschnitte (8a, 8b), in Draufsicht betrachtet, zur axialen Richtung jeweils unter einem Winkel (α, δ) von 2° bis 18°, insbesondere von 3° bis 15°, bevorzugt von 5° bis 10°, verlaufen.

6. Fahrzeugluftreifen nach Anspruch 5, **dadurch gekennzeichnet, dass** der Winkel (δ), unter welchem der Einschnittabschnitt (8a), welcher bis zur Endflanke (7c) der Vertiefung (7) verläuft, vom Winkel (α), unter welchem der Einschnittabschnitt (8b), welcher bis zur Endflanke (6c) der Querrille (5) verläuft, um höchstens 10°, bevorzugt um höchstens 5°, abweicht.

7. Fahrzeugluftreifen nach einem der Ansprüche 1 bis 6, **dadurch gekennzeichnet, dass** die Vertiefung (7) bezüglich einer in radialer Richtung verlaufenden Mittelebene (Ev) symmetrisch ausgeführt ist und die Querrille (5) eine Rillenmittellinie (m_{QR}) aufweist, wobei - jeweils in Draufsicht betrachtet - die Mittelebene (Ev) der Vertiefung (7) zur Rillenmittellinie (m_{QR}) der Querrille (5) bezüglich der axialen Richtung gegensinnig geneigt ist und wobei - jeweils bezüglich der axialen Richtung - der Einschnittabschnitt (8a), welcher bis zur Endflanke (7c) der Vertiefung (7) verläuft, gleichsinnig zur Mittelebene (Ev) der Vertiefung (7) und der Einschnittabschnitt (8b), welcher bis zur Endflanke (6c) der Querrille (5) verläuft, gleichsinnig zur Rillenmittellinie (m_{QR}) geneigt ist.

8. Fahrzeugluftreifen nach Anspruch 7, **dadurch gekennzeichnet, dass** - jeweils in Draufsicht betrachtet - der Einschnittabschnitt (8a), welcher bis zur Endflanke (7c) der Vertiefung (7) verläuft, bezogen auf die Einschnittmittellinie (m_{E}), in geradliniger Verlängerung der Mittelebene (Ev) der Vertiefung (7) und der Einschnittabschnitt (8b), welcher bis zur Endflanke (6c) der Querrille (5) verläuft, bezogen auf die Einschnittmittellinie (m_{E}), in geradliniger Verlängerung der Rillenmittellinie (m_{QR}) verläuft.

9. Fahrzeugluftreifen nach Anspruch 7 oder 8, **dadurch gekennzeichnet, dass** die Vertiefung (7) an der Laufstreifenperipherie eine senkrecht zu ihrer Mittelebene (Ev) ermittelte Breite (bv) von 75% bis 125%, insbesondere von 90% bis 110%, besonders bevorzugt von 95% bis 105%, der Breite (b_{QR}) der Querrille (5) innerhalb der Bodenaufstandsfläche des Laufstreifens aufweist.

10. Fahrzeugluftreifen nach einem der Ansprüche 7 bis 9, **dadurch gekennzeichnet, dass** die Vertiefung (7) eine in die axiale Richtung projizierte, auf ihre Mittelebene (Ev) bezogene Länge (Iv) von 15% bis 25% der innerhalb der Bodenaufstandsfläche an der Laufstreifenperipherie in axialer Richtung ermittelten Breite (b_{PR}) der schulterseitigen Profilrippe (1) aufweist.

11. Fahrzeugluftreifen nach einem der Ansprüche 1 bis 10, **dadurch gekennzeichnet, dass** die Vertiefung (7) an ihrer tiefsten Stelle in radialer Richtung eine Tiefe (tv) aufweist, welche 50% bis 100% der Profiltiefe (T_{P}), vorzugsweise mindestens 60% der Profiltiefe (T_{P}) und maximal der um 1,0 mm verringerten Profiltiefe (T_{P}), beträgt.

12. Fahrzeugluftreifen nach einem der Ansprüche 1 bis 11, **dadurch gekennzeichnet, dass** die Vertiefung (7) an ihrer tiefsten Stelle in radialer Richtung eine Tiefe (tv) und die Querrille (5) an ihrer tiefsten Stelle in radialer Richtung eine Tiefe (t_{QR}) aufweist, wobei die Tiefe (t_{V}) der Vertiefung (7) von der Tiefe (t_{QR}) der Querrille (5) um höchstens 1,0 mm abweicht.

13. Fahrzeugluftreifen nach einem der Ansprüche 1 bis 12, **dadurch gekennzeichnet, dass** die Querrille (5) innerhalb der Bodenaufstandsfläche eine an der Laufstreifenperipherie ermittelte, in die axiale Richtung projizierte, auf die Rillenmittellinie (m_{QR}) bezogene Länge (l_{QR}) von 40% bis 60%, insbesondere von 45% bis 55%, der auf analoge Weise ermittelten Breite (b_{PR}) der schulterseitigen Profilrippe (1) aufweist.

14. Fahrzeugluftreifen nach einem der Ansprüche 1 bis 13, **dadurch gekennzeichnet, dass** die Vertiefung (7), in Draufsicht betrachtet, U-förmig aufgeführt ist, wobei die freien Enden der U-Schenkel an der Umfangsrille (4) liegen.

15. Fahrzeugluftreifen nach einem der Ansprüche 1 bis 14, **dadurch gekennzeichnet, dass** bei der Vertiefung (7) an einem der an der Umfangsrille (4) liegenden Eckbereich der schulterseitigen Profilrippe (1) eine dreieckige Eckfase (9) ausgebildet ist.

## Claims

1. Pneumatic vehicle tyre with a tread having at least one shoulder-side profile rib (1) which is delimited by a circumferential channel (4) formed to a profile depth (T_{P}),
said profile rib being provided with a multiplicity of transverse channels (5) which run parallel to one another in plan view and end before the circumferential channel (4) and have in each case one channel base (6b) and one end flank (6c) running as a continuation of said channel base to the tread periphery, and
said profile rib furthermore being provided with depressions (7) which proceed from the circumferential channel (4) and are open to the tread periphery and have an end flank (7c) situated in the interior of the shoulder-side profile rib (1) and running to the tread periphery, wherein the depressions (7) are assigned to in each case one transverse channel (5) such that their end flanks (6c, 7c) are situated opposite one another,
wherein, between each depression (7) and the transverse channel (5) assigned thereto, there runs in each case one short sipe (8) of narrower and shallower form in comparison with the transverse channel (5) and the depression (7), said short sipe having a depth (t_{E}) of at least 30% of the profile depth (T_{P}),
**characterized**
**in that**, in plan view, the short sipe (8) is made up of two sipe portions (8a, 8b) which include an angle (λ) of 130° to 170° and of which one extends as far as the end flank (7c) of the depression (7) and the other extends as far as the end flank (6c) of the transverse channel (5).

2. Pneumatic vehicle tyre according to Claim 1, **characterized in that** the short sipe (8) has a width (b_{E}) of 0.4 mm to 1.0 mm.

3. Pneumatic vehicle tyre according to Claim 1 or 2, **characterized in that** the depth (t_{E}) of the short sipe (8) is at most the profile depth (T_{P}) reduced by 1.5 mm.

4. Pneumatic vehicle tyre according to one of Claims 1 to 3, **characterized in that** the angle (λ) which the sipe portions (8a, 8b) include with one another is 150° to 165°, in particular up to 155°.

5. Pneumatic vehicle tyre according to one of Claims 1 to 4, **characterized in that**, when seen in plan view, the sipe portions (8a, 8b) each run at an angle (α, δ) of 2° to 18°, in particular of 3° to 15°, preferably of 5° to 10°, to the axial direction.

6. Pneumatic vehicle tyre according to Claim 5, **characterized in that** the angle (δ) of the sipe portion (8a) running as far as the end flank (7c) of the depression (7) differs from the angle (α) of the sipe portion (8b) running as far as the end flank (6c) of the transverse channel (5) by at most 10°, preferably by at most 5°.

7. Pneumatic vehicle tyre according to one of Claims 1 to 6, **characterized in that** the depression (7) is of symmetrical form in relation to a radially extending central plane (Ev) and the transverse channel (5) has a channel midline (m_{QR}), wherein - in each case when seen in plan view - the central plane (Ev) of the depression (7) is inclined oppositely to the channel midline (m_{QR}) of the transverse channel (5) in relation to the axial direction, and wherein - in each case in relation to the axial direction - the sipe portion (8a) running as far as the end flank (7c) of the depression (7) is inclined in the same direction as the central plane (Ev) of the depression (7) and the sipe portion (8b) running as far as the end flank (6c) of the transverse channel (5) is inclined in the same direction as the channel midline (m_{QR}).

8. Pneumatic vehicle tyre according to Claim 7, **characterized in that** - in each case when seen in plan view - the sipe portion (8a) running as far as the end flank (7c) of the depression (7), based on the sipe midline (m_{E}), runs as a rectilinear elongation of the central plane (Ev) of the depression (7), and the sipe portion (8b) running as far as the end flank (6c) of the transverse channel (5), based on the sipe midline (m_{E}), runs as a rectilinear elongation of the channel midline (m_{QR}).

9. Pneumatic vehicle tyre according to Claim 7 or 8, **characterized in that**, at the tread periphery, the depression (7) has a width (bv), determined perpendicularly to its central plane (Ev), of 75% to 125%, in particular of 90% to 110%, particular preferably of 95% to 105%, of the width (b_{QR}) of the transverse channel (5) within the ground contact area of the tread.

10. Pneumatic vehicle tyre according to one of Claims 7 to 9, **characterized in that** the depression (7) has a length (l_{V}), projected into the axial direction and based on its central plane (Ev), of 15% to 25% of the width (b_{PR}) of the shoulder-side profile rib (1) determined at the tread periphery in an axial direction within the ground contact area.

11. Pneumatic vehicle tyre according to one of Claims 1 to 10, **characterized in that** the depression (7) has a depth (tv) at its lowest point in a radial direction, which depth is 50% to 100% of the profile depth (T_{P}), preferably at least 60% of the profile depth (T_{P}) and at most the profile depth (T_{P}) reduced by 1.0 mm.

12. Pneumatic vehicle tyre according to one of Claims 1 to 11, **characterized in that** the depression (7) has a depth (tv) at its lowest point in the radial direction and the transverse channel (5) has a depth (t_{QR}) at its lowest point in the radial direction, with the depth (tv) of the depression (7) differing from the depth (t_{QR}) of the transverse channel (5) by at most 1.0 mm.

13. Pneumatic vehicle tyre according to one of Claims 1 to 12, **characterized in that**, within the ground contact area, the transverse channel (5) has a length (l_{QR}), determined at the tread periphery and projected into the axial direction and based on the channel midline (m_{QR}), of 40% to 60%, in particular of 45% to 55%, of the width (b_{PR}), determined in an analogous manner, of the shoulder-side profile rib (1).

14. Pneumatic vehicle tyre according to one of Claims 1 to 13, **characterized in that**, when seen in plan view, the depression (7) is of U-shaped form, wherein the free ends of the U legs are situated at the circumferential channel (4).

15. Pneumatic vehicle tyre according to one of Claims 1 to 14, **characterized in that** a triangular corner bevel (9) is formed at the depression (7) at one of the corner regions of the shoulder-side profile rib (1) that is situated at the circumferential channel (4).

## Revendications

1. Pneu de véhicule comprenant une bande de roulement avec au moins une nervure de profil (1) côté épaulement, délimitée par une rainure circonférentielle (4) réalisée à une profondeur de profil (T_{P}),
qui est pourvue d'une pluralité de rainures transversales (5) s'étendant en parallèle les unes aux autres en vue de dessus, se terminant devant la rainure circonférentielle (4), comprenant respectivement un fond de rainure (6b) et un flanc d'extrémité (6c) s'étendant dans le prolongement de celui-ci jusqu'à la périphérie de bande de roulement, et
et qui est en outre pourvue de creux (7) partant de la rainure circonférentielle (4), ouverts vers la périphérie de bande de roulement, avec un flanc d'extrémité (7c) situé à l'intérieur de la nervure de profil (1) côté épaulement, s'étendant jusqu'à la périphérie de bande de roulement, dans lequel les creux (7) sont respectivement associés à une rainure transversale (5) de sorte que leurs flancs d'extrémité (6c, 7c) sont opposés,
dans lequel entre chaque creux (7) et la rainure transversale (5) associée à celui-ci, s'étend respectivement une entaille courte (8) réalisée de manière plus étroite et moins profonde que la rainure transversale (5) et le creux (7), d'une profondeur (t_{E}) d'au moins 30 % de la profondeur de sculpture (T_{P}),
**caractérisé en ce que**
l'entaille courte (8), en vue de dessus, est composée de deux sections d'entaille (8a, 8b) formant un angle (λ) de 130° à 170° et dont l'une atteint le flanc d'extrémité (7c) du creux (7) et l'autre atteint le flanc d'extrémité (6c) de la rainure transversale (5).

2. Pneu de véhicule selon la revendication 1, **caractérisé en ce que** l'entaille courte (8) présente une largeur (b_{E}) de 0,4 mm à 1,0 mm.

3. Pneu de véhicule selon la revendication 1 ou 2, **caractérisé en ce que** la profondeur (t_{E}) de l'entaille courte (8) est au maximum la profondeur de sculpture (T_{P}) diminuée de 1,5 mm.

4. Pneu de véhicule selon l'une quelconque des revendications 1 à 3, **caractérisé en ce que** l'angle (λ) que forment les sections d'entaille (8a, 8b) entre elles mesure de 150° et 165°, en particulier 155°.

5. Pneu de véhicule selon l'une quelconque des revendications 1 à 4, **caractérisé en ce que** les sections d'entaille (8a, 8b), en vue de dessus, s'étendent par rapport à la direction axiale respectivement selon un angle (α, δ) de 2° à 18°, en particulier de 3° à 15°, de préférence de 5° à 10°.

6. Pneu de véhicule selon la revendication 5, **caractérisé en ce que** l'angle (δ) selon lequel la section d'entaille (8a) qui s'étend jusqu'au flanc d'extrémité (7c) du creux (7) dévie de l'angle (α) selon lequel la section d'entaille (8b) qui s'étend jusqu'au flanc d'extrémité (6c) de la rainure transversale (5) au maximum de 10°, de préférence au maximum de 5°.

7. Pneu de véhicule selon l'une quelconque des revendications 1 à 6, **caractérisé en ce que** le creux (7) est réalisé de manière symétrique par rapport à plan médian (Ev) s'étendant dans la direction radiale et la rainure transversale (5) présente une ligne médiane de rainure (m_{QR}), dans lequel - respectivement en vue de dessus - le plan médian (Ev) du creux (7) est incliné vers la ligne médiane de rainure (m_{QR}) de la rainure transversale (5) en contresens par rapport à la direction axiale, et dans lequel - respectivement par rapport à la direction axiale - la section d'entaille (8a) qui s'étend jusqu'au flanc d'extrémité (7c) du creux (7) est inclinée dans le même sens que le plan médian (Ev) du creux (7), et la section d'entaille (8b) qui s'étend jusqu'au flanc d'extrémité (6c) de la rainure transversale (5) est inclinée dans le même sens que la ligne médiane de rainure (m_{QR}).

8. Pneu de véhicule selon la revendication 7, **caractérisé en ce que** - respectivement en vue de dessus - la section d'entaille (8a) qui s'étend jusqu'au flanc d'extrémité (7c) du creux (7) s'étend par rapport à la ligne médiane d'entaille (m_{E}) dans le prolongement droit du plan médian (Ev) du creux (7), et la section d'entaille (8b) qui s'étend jusqu'au flanc d'extrémité (6c) de la rainure transversale (5), par rapport à la ligne médiane d'entaille (m_{E}) s'étend dans le prolongement droit de la ligne médiane de rainure (m_{QR}).

9. Pneu de véhicule selon la revendication 7 ou 8, **caractérisé en ce que** le creux (7) présente à la périphérie de bande de roulement une largeur (bv), établie perpendiculairement à son plan médian (Ev), de 75 % à 125 %, en particulier de 90 % à 110 %, de manière particulièrement préférée de 95 % à 105 %, de la largeur (b_{QR}) de la rainure transversale (5) à l'intérieur de la surface de contact avec le sol de la bande de roulement.

10. Pneu de véhicule selon l'une quelconque des revendications 7 à 9, **caractérisé en ce que** le creux (7) présente une longueur (Iv) projetée dans la direction axiale, rapportée à son plan médian (Ev), de 15 % à 25 % de la largeur (b_{PR}) de la nervure de profil (1) côté épaulement, établie à l'intérieur de la surface de contact avec le sol à la périphérie de bande de roulement dans la direction axiale.

11. Pneu de véhicule selon l'une quelconque des revendications 1 à 10, **caractérisé en ce que** le creux (7) présente à son endroit le plus profond dans la direction radiale une profondeur (tv) qui mesure de 50 % à 100 % de la profondeur de sculpture (T_{P}), de préférence au moins 60 % de la profondeur de sculpture (T_{P}) et au maximum la profondeur de sculpture (T_{P}) diminuée de 1,0 mm.

12. Pneu de véhicule selon l'une quelconque des revendications 1 à 11, **caractérisé en ce que** le creux (7) présente à son endroit le plus profond dans la direction radiale une profondeur (tv), et la rainure transversale (5) présente à son endroit le plus profond dans la direction radiale une profondeur (t_{QR}), la profondeur (tv) du creux (7) déviant de la profondeur (t_{QR}) de la rainure transversale (5) au maximum de 1,0 mm.

13. Pneu de véhicule selon l'une quelconque des revendications 1 à 12, **caractérisé en ce que** la rainure transversale (5) présente à l'intérieur de la surface de contact avec le sol une longueur (l_{QR}) établie à la périphérie de bande de roulement, projetée dans la direction axiale, se rapportant à la ligne médiane de rainure (m_{QR}), de 40 % à 60 %, en particulier de 45 % à 55 % de la largeur (b_{PR}) établie de manière analogue de la nervure de profil (1) côté épaulement.

14. Pneu de véhicule selon l'une quelconque des revendications 1 à 13, **caractérisé en ce que** le creux (7), en vue de dessus, est réalisé en forme de U, les extrémités libres des branches de U se trouvant au niveau de la rainure circonférentielle (4).

15. Pneu de véhicule selon l'une quelconque des revendications 1 à 14, **caractérisé en ce qu'**un chanfrein d'angle triangulaire (9) est réalisé au niveau du creux (7) dans une zone d'angle de la nervure de profil (1) côté épaulement, située au niveau de la rainure circonférentielle (4).
